(19) Europäisches Patentamt
European Patent Office
Office européen des brevets

(11) **EP 1 892 842 B1**

(12) **EUROPEAN PATENT SPECIFICATION**

(45) Date of publication and mention
of the grant of the patent:
**20.05.2009 Bulletin 2009/21**

(51) Int Cl.:
***H04B 1/707*** (2006.01)

(21) Application number: **07122752.4**

(22) Date of filing: **06.10.2000**

(54) **Equalized parallel interference cancellation for cdma systems**

Ausgeglichene parallele Interferenzunterdrückung für CDMA-Systeme

Annulation d'interférences parallèles égalisées (EPIC) pour systèmes CDMA

(84) Designated Contracting States:
**DE GB**

(43) Date of publication of application:
**27.02.2008 Bulletin 2008/09**

(62) Document number(s) of the earlier application(s) in
accordance with Art. 76 EPC:
**00969445.6 / 1 325 563**

(73) Proprietor: **Nokia Corporation**
**02150 Espoo (FI)**

(72) Inventors:
• **WANG, Haifeng**
**Shanghai, China, 200051 (CN)**
• **BU, Zhiyong**
**2-501, Tai wan Road 7**
**Qingdao, Shandong 266071 (CN)**

• **LILLEBERG, Jorma**
**02150, Espoo (FI)**

(74) Representative: **TBK-Patent**
**Bavariaring 4-6**
**80336 München (DE)**

(56) References cited:
**WO-A-00/72459**     **US-A- 5 644 592**

• **DIVASALAR D ET AL: "IMPROVED PARALLEL INTERFERENCE CANCELLATION FOR CDMA" IEEE TRANSACTIONS ON COMMUNICATIONS, IEEE INC. NEW YORK,US, vol. 46, no. 2, 1 February 1998 (1998-02-01), pages 258-268, XP000734697 ISSN: 0090-6778**

**Description**

FIELD OF THE INVENTION

In general, the present invention relates to third generation wideband code division multiple access systems (3G WCDMA systems), and in particular, to a method of detecting a spread spectrum composite signal comprising different users' signals that have been spread with signature waveforms.

BACKGROUND OF THE INVENTION

Multiuser communications systems that employ CDMA (Code Division Multiple Access) exhibit a limit on the number of users that can simultaneously communicate over a channel and maintain a specified level of performance per user. This limitation is caused mainly by multiple access interference. In general, solutions to this limitation have employed either optimum multiuser detection or interference cancellation methods.

Optimal multiuser detection (MUD) methods (ref: S. Verdu, "Minimum probability of error.for asynchronous Gaussian multiple-access channels," IEEE Trans. on Inform. Theory, IT-32, pp.85-96, Jan 1986) are able to eliminate the multiple access interference (MAI), but show a complexity that is exponential to the number of users, which seems impossible for practical implementations.

With respect to criteria of complexity and performance, the most appropriate choice of MUD for practical systems has been evaluated in T. Ojanpera and R. Prased, "Wideband CDMA for Third Generation Mobile Communications", Artech House Pub., 1998. It has been found that the implementation of a 3-stage parallel interference cancellation (PIC) provides preferable results.

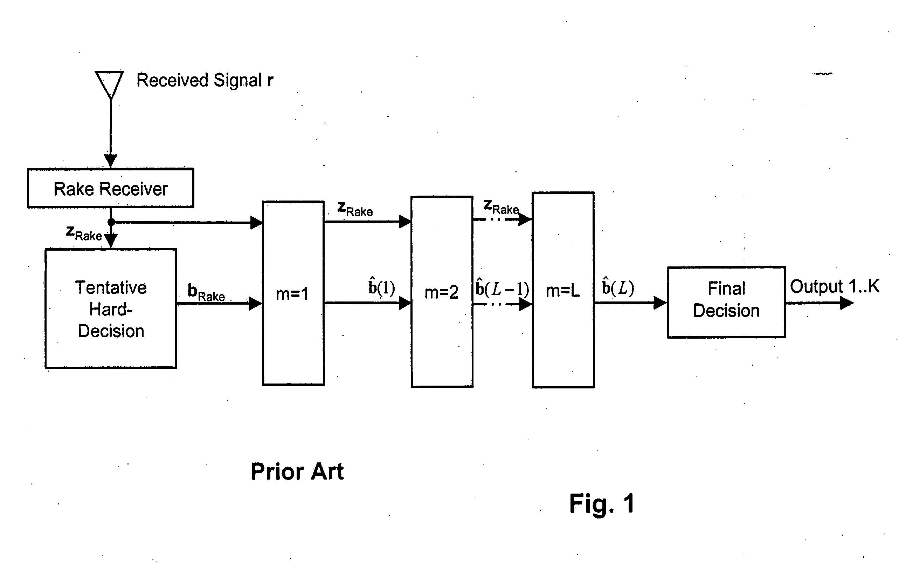

Fig. 1 shows an L-stage parallel interference cancellation approach, with m being the number of each stage. A composite signal comprises a series of coded signals from users 1 through K, each used to modulate an RF carrier using conventional modulation techniques, such as binary phase shift keying (BPSK). The received discrete-time signal r can be written as

$$r = SAb + n,$$

wherein:
$S$ = spreading code matrix;
$A$ = channel coefficient matrix;
$b = [b_1, b_2, ..., b_K]$ = signals transmitted by users 1 through K; and
$n$ = AWGN noise.

For each user k equal to 1 through K, a unique code s(k) is used to spread the signal in the user transmitter, the spreading code matrix $S$ consisting of the codes s(k).

The outputs of the rake receiver $z_{Rake}$:

$$z_{Rake} = A^H S^H r = A^H S^H (SAb + n),$$

wherein:
$()^H$ = conjugate transpose operation; and
$S^H S$ = cross-correlations between the spreading codes.

Hence, the rake receiver output consists of a despreaded and matched signal as $z_{Rake} = (z_{1Rake}, z_{2Raker}, ..., z_{KRake}]$. For example, the signal $z_{1Rake}$ comprises the signal $b_1$ received from a user 1 plus interference from all other users 2 through K. The signal $z_{Rake}$ may be subjected to a tentative hard-decision concerning the bit polarity so that a signal $b_{Rake} = [b_{1Rake}, b_{2Rake}, ..., b_{Krake}]$ comprising bit polarities of +1 or -1 for $z_{1Rake}$ through $z_{KRake}$ is the output of the Rake receiver. The signals $b_{Rake}$ and $z_{Rake}$ are used as inputs into a first parallel cancellation stage m=1. Each parallel cancellation stage requires only one bit time causing each stage to be delayed by the product of the number of previous stages and the one bit time interval. The output $\hat{b}(L)$ of the final stage L is estimated by a final decision device such as a hard decision device.

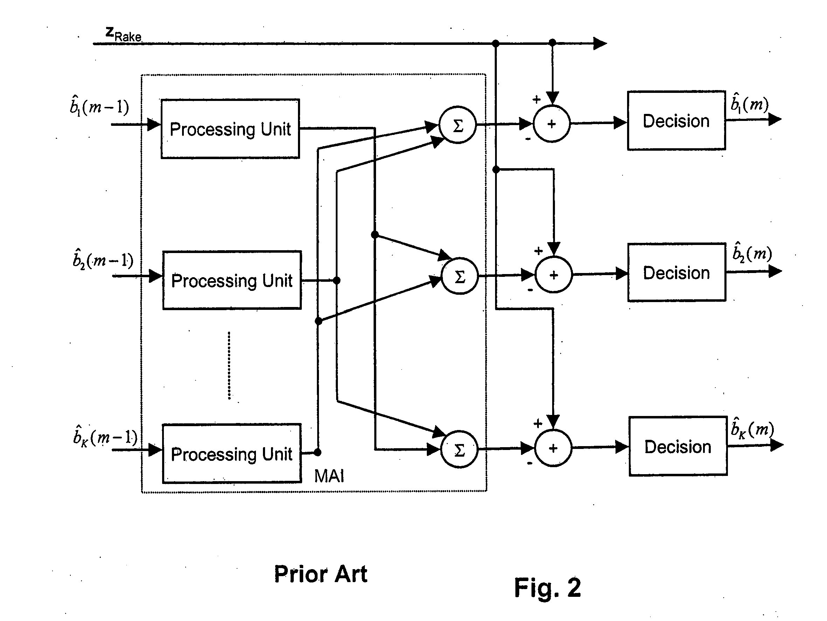

Fig. 2 shows an mth stage conventional PIC detector for BPSK (Binary Phase Shift Keying) modulation proposed by M.K. Varanasi and B. Aazhang, "Multistage detection for asynchronous code-division multiple-access communications," IEEE Trans.Comm., COM-38(4), April 1990. The estimated signal $\hat{b}(m)$ at stage m is calculated according to the following equation:

$$\hat{b}(m) = \mathrm{sgn}[z_{Rake} - MAI_{m-1}] = \mathrm{sgn}[z_{Rake} - F\hat{b}(m-1)], \quad m=1..L \qquad (1)$$

wherein:

$$\hat{b}(0) = b_{Rake} = \mathrm{sgn}[z_{Rake}(0)];$$

and

$$F = A^H S^H SA - \mathrm{diag}([A^H S^H SA]_{ii}) = \text{off-diagonal cross-correlation matrix.}$$

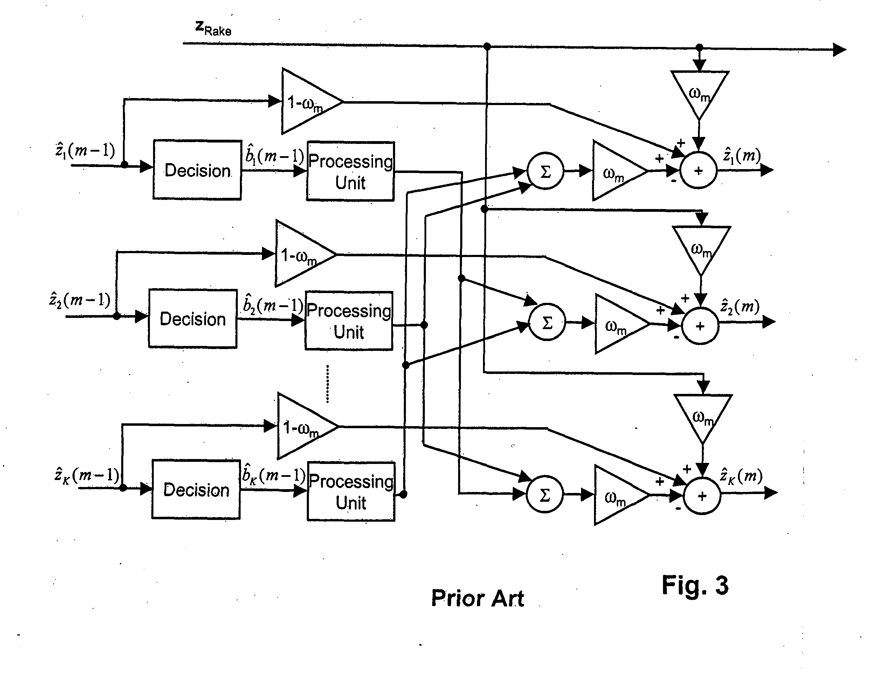

The MAI can be calculated by the processing units and the summing points shown in Fig. 2. For example, MAI for user 1 is calculated by the processed and summed signals from users 2 to K and then is subtracted from $z_{Rate}$. The subtraction result is subjected to a hard decision. The output of the $L^{th}$-stage $\hat{b}(L)$ may be subjected to a final decision in order to obtain an output signal $b_{PIC}$. Fig. 3 shows an mth stage PPIC (Partial Parallel Interference Cancellation) detector disclosed in the US-A-5 644 592 assigned to Divsalar et al. The estimated signal $\hat{z}(m)$ at stage m is calculated in accordance with the following equation:

$$\hat{z}(m) = \omega_m[z_{Rake} - F\hat{b}(m-1)] + (1-\omega_m)\hat{z}(m-1), \quad m=1..L \qquad (2)$$

wherein:

$$\hat{b}(m) = \mathrm{sgn}[\hat{z}(m)];$$

and

$$\hat{z}(0) = z_{Rake}.$$

As it is shown in Fig. 3, soft-outputs of data estimates $\hat{z}(m-1)$ are weighted by $1-\omega_m$ and then added with the soft signal $z_{Rake}$ with cancellation of MAI regenerated by latest estimates. The data estimates at the $m^{th}$ stage can be obtained from this added signal $\hat{z}(m)$. In a final decision device, the data estimates $\hat{z}(L)$ may be subjected to a hard-decision so that a hard-decision signal $b_{PPIC}$ is output.
The post-published WO 00/72459 A discloses a differencing multistage detector which includes a plurality of stages, each stage including an interference canceller for removing intra-cell interference caused by the other users in the cell and producing an estimation output vector, wherein except for a first stage, the estimation output vector of a current stage is based on both a decision of the interference canceller of the current stage and the output from an interference canceller of a previous stage. The estimation output vector of a current stage is produced by combining the output from an interference canceller of a previous stage and the decision of the interference canceller of the current stage. Except for the first stage each interference canceller calculates an estimate of multi-user interference by computing a product of a cross-correlation of the received signals and a difference signal thereby reducing the number of multiplication operations required.

## SUMMARY OF THE INVENTION

It is an object of the present invention to improve the system performance in suboptimal MUD with negligible increase of complexity.

This object is achieved by a method according to claim 1 and a detecting device according to claim 13.

According to an embodiment of the invention, weights or weighting factors can be defined by powers of 2, which further reduces the implementation complexity of the present invention significantly.

The detecting device may be implemented in an apparatus such as a base station or terminal comprising a rake receiver.

The present invention provides a significantly improved system performance compared to conventional PIC detectors with nearly the same complexity. Moreover, the EPIC (Equalized Parallel Interference Cancellation) detection according to the present invention significantly outperforms PPIC detectors in heavily loaded systems.

According to the present invention, an extra K bit memory for storing hard-decisions of a previous stage is required, where K is the number of users. For example, if K=31, an extra memory with the capacity of 31 bints or 4 bytes is required. However, the conventional PPIC detector requires more memory capacity for storing soft-decisions of a previous stage. For example, if 8 bits are used for each soft-decision and K=31, $31 \times 8$ bits or 31 bytes of memory capacity are required for the PPIC detector.

The EPIC detector according to the present invention requires MK times digital two-bit-comparisons where M is number of stages and the two-bit comparator can be installed by only four logical gates. The EPIC detector also requires approximately extra MK/4 multiplications (*floating _point* $\times$ *weight* $\times \pm 1$) because there is no need for extra multiplications if hard-decisions of two successive stages are the same. However, the extra multiplications require 5MK/ 2 operations if 8 bits are used for floating points and 4 bits are used for weight. Furthermore, if the weights could be defined by power of 2, only 2 bits might be needed for weight. Then the extra multiplications only require 3MK/4 operations and the complexity can be further reduced significantly.

In contrast thereto, the conventional PPIC detector requires 2MK extra multiplications (floating_point $\times$ weight $\times$ floating_point). This means, extra 64MK operations are required.

It can be noticed that the present invention only requires extra operations negligible compared to the conventional PIC detector. Moreover, the complexity can be considerably reduced by the present invention compared to the PPIC detector.

The present invention can easily be implemented in 3G products like 3G FDD/TDD-WCDMA base stations or 3G TDD-WCDMA terminals, providing significant improvement of system performance.

In the following the present invention will be described by way of preferred embodiments thereof with reference to the accompanying drawings.

## BRIEF DESCRIPTION OF THE DRAWINGS

Fig. 1 shows a schematic block diagram of parallel stages of a prior art IC system comprising a rake receiver.

Fig. 2 shows a schematic block diagram of a stage of a conventional PIC detector.

Fig. 3 shows a schematic block diagram of a stage of a conventional PPIC detector.

Fig. 4 shows a schematic block diagram of a 2-stage EPIC detector according to a first embodiment of the present invention.

Fig. 5 shows a flow-chart of the operation of a 3-stage EPIC detector according to a second embodiment of the present invention.

Fig. 6 shows a graph of the bit error rate BER of a rake receiver alone, a rake receiver with a PIC detector, a rake receiver with a PPIC detector and a rake receiver with an EPIC detector according to the second embodiment of the present invention, as a function of the signal-to-noise ratio in a system with 21 users, a 31-bit Gold code and ideal power control.

Fig. 7 shows a graph of the bit error rate BER of a rake receiver alone, a rake receiver with a PIC detector, a rake receiver with a PPIC detector and a rake receiver with an EPIC detector according to the second embodiment of the present invention, as a function of the signal-to-noise ratio in a system with 21 users, a 31-bit Gold code and a power control in the range of [-5, +5]dB.

Fig. 8 shows a graph of the bit error rate BER of a rake receiver alone, a rake receiver with a PIC detector, a rake receiver with a PPIC detector and a rake receiver with an EPIC detector according to the second embodiment of the present invention, as a function of the signal-to-noise ratio in a system with 31 users, a 31-bit Gold code and ideal power control.

Fig. 9 shows a graph of the bit error rate BER of a rake receiver alone, a rake receiver with a PIC detector, a rake receiver with a PPIC detector and a rake receiver with an EPIC detector according to the second embodiment of the present invention, as a function of the signal-to-noise ratio in a system with 31 users, a 31-bit Gold code and a power control in the range of [-5, +5] dB.

## DESCRIPTION OF THE PREFERRED EMBODIMENTS

The idea of the present invention is to combine and equalize hard-decision outputs of a rake receiver and a 1-stage parallel interference cancellation (PIC) detector in order to achieve a more reliable data estimation.

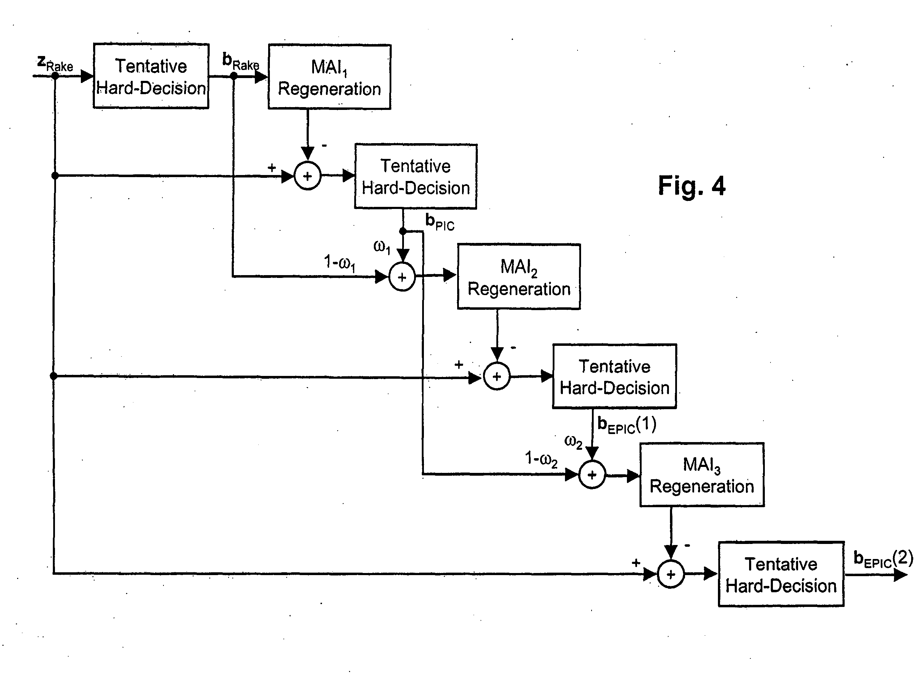

According to Fig. 4 showing a block diagram of the present invention and a weighting scheme according to the first embodiment, the signal $z_{Rake}$ output from the rake receiver is subjected to a tentative hard-decision to obtain hard-decision values $b_{Rake}$ in accordance with:

$$[b_{Rake}]_k = \text{sgn}\{[z_{Rake}]_k\} ,$$

with k=1,2,..,K, k being the user index.

The hard-decision values $b_{Rake}$ are subjected to an MAI regeneration which consists of a parallel interference cancellation in accordance with:

$MAI_1 = Fb_{Rate}$, $F = A^H S^H SA$-diag $([A^H S^H SA]_{ii})$ off-diagonal cross-correlation matrix.

The values output by the first MAI regeneration shown in Fig. 4 are subtracted from the rake receiver signal $z_{Raket}$ and the result is subjected to a tentative hard-decision. The signal $b_{PIC}$ output by the tentative hard-decision is determined as follows:

$$b_{PIC} = \text{sgn}[z_{Rake} - Fb_{Rake}] .$$

If $[b_{Rake}]_k = [b_{PIC}]_k$, these decisions are regarded as highly reliable, and the induced multiple access interference (MAI) is regenerated and fully subtracted from the soft rake receiver outputs $z_{Raxe}$. If $[b_{Rate}]_k \neq [b_{PIC}]_k$, the MAI induced by low-reliability decisions are weighted and fractionally subtracted from $z_{Rake}$. That is, the second MAI regeneration shown in Fig. 4 is calculated as follows:

$$MAI_2 = F[\omega_1 b_{PIC} + (1 - \omega_1) b_{Rake})]$$

The output signal of the second MAI regeneration is subtracted from $z_{Rate}$. The subtraction result is subjected to a tentative hard-decision and a first-stage equalized parallel interference cancellation output $b_{EPIC}$ (1) is obtained as follows:

$$b_{EPIC}(1) = \text{sgn}\{z_{Rake} - F[\omega_1 b_{PIC} + (1 - \omega_1) b_{Rake}]\} .$$

At the second stage, the hard-decisions $b_{PIC}$ of the 1-stage PIC and the first-stage EPIC detector output $b_{EPIC}$ (1) are equalized. Subsequently, at the third stage, the hard-decisions $b_{EPIC}(1)$ and $b_{EPIC}(2)$ of the first stage and second stage EPIC are equalized, etc., in accordance with the following equation:

$$b_{EPIC}(m) = \text{sgn}\{z_{Rake} - F[\omega_m b_{EPIC}(m-1) + (1-\omega_m)b_{EPIC}(m-2)] \quad ,$$

with m=2, 3,..,L; and

$$b_{EPIC}(0) = b_{PIC} \; .$$

A more general equation covering the first to L$^{th}$ stage of the EPIC detector according to the present invention is as follows:

$$\hat{b}(m) = \text{sgn}\{z_{Rake} - F[\omega_m \hat{b}(m-1) + (1-\omega_m)\hat{b}(m-2)] \qquad\qquad (3)$$

wherein:
m = 2, 3, ..,L;

$$\hat{b}(0) = b_{Rake} \; ;$$

$$\hat{b}(1) = b_{PIC} \; .$$

The EPIC process will be repeated until a predefined number of stages has been completed which relates to the convergence rate or the target bit-error-rate (BER).

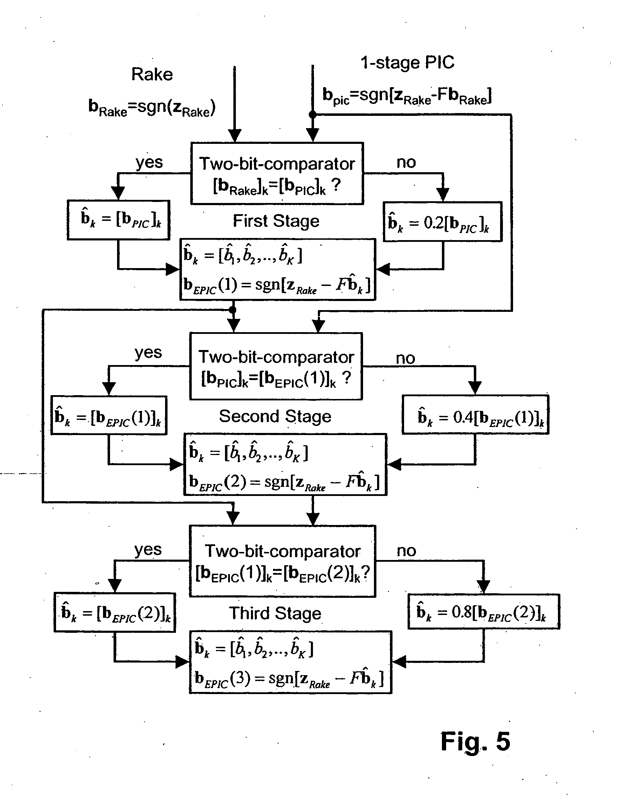

Fig. 5 shows a flow-chart according to a second embodiment of the EPIC detector of the present invention. According to the second and preferred embodiment, the EPIC detector comprises three stages, and the weighting factors of stages 1 to 3 are chosen to $\omega_m$=[0.6;0.7;0.9]. $b_{EPIC}$ (m) (m=1,2,3) is calculated according to the following equation:

$$b_{EPIC}(m) = \text{sgn}[z_{Rake} - F\hat{b}_k] \; .$$

At the first stage, the hard-decision outputs $b_{Rake}$ of the rake receiver are compared with the outputs $b_{PIC}$ of the 1-stage PIC detector by a two-bit-comparator, which consists of only 4 logical gates, *for each* user. If the two signals are equal, $\hat{b}_k$ is set to $[b_{PIC}]_k$. If not, $\hat{b}_k$ is set to $0.2[b_{PIC}]_k$. The value 0.2=(2$\omega_1$-1) is obtained from the weight $\omega_1$=0.6 and from the fact that $[b_{Rake}]_k = - [b_{PIC}]_k$, wherein $\hat{b}_k=\omega_1 b_{PIC}+(1-\omega_1)b_{Rake}$.

At the second stage, the hard-decision outputs $b_{EPIC}(1)$ and $b_{PIC}$ are compared by a two-bit-comparator *for each* user. If the two signals are equal, $\hat{b}_k$ is set to $[b_{EPIC}(1)]_k$. If not, $\hat{b}_k$ is set to $0.4[b_{EPIC}(1)]_k$. The value 0.4=(2$\omega_2$-1) is obtained from the weight $\omega_2$=0.7 and from the fact that $b_{PIC} = -b_{EPIC}(1)$, wherein $\hat{b}_k=\omega_2 b_{EPIC}(1)+ (1-\omega_2) b_{PIC}$.

At the third stage, the hard-decision outputs $b_{EPIC}(1)$ and $b_{EpIC}(2)$ are compared by a two-bit-comparator *for each* user. If the two signals are equal, $\hat{b}_k$ is set to $[b_{EPIC}(2)]_k$. If not, $\hat{b}_k$ is set to $0.8[b_{ERIC}(2)]_k$. The value 0.8=(2$\omega_3$-1), is obtained from the weight $\omega_3$=0.9 and from that fact that $b_{EPIC}(2) = -b_{EPIC}(1)$, wherein $\hat{b}_k=\omega_3 b_{EPIC}(2)+(1-\omega_3)b_{EPIC}(1)$.

The determination of $\hat{b}_k$ can also be made in accordance with:

$$\hat{b}_k = (2\omega_m-1)[b_{\text{EPIC}}(m-1)]_k \quad \text{if} \quad [b_{\text{EPIC}}(m-1)]_k \neq [b_{\text{EPIC}}(m-2)]_k$$

$$= [b_{\text{EPIC}}(m-1)]_k \quad \text{if} \quad [b_{\text{EPIC}}(m-1)]_k = [b_{\text{EPIC}}(m-2)]_k$$

The weighting factors $\omega_m=[0.6;0.7;0.9]$ with the only restriction $0.5<\omega 1<\omega 2<\omega 3$ have been tested in simulations, as it is assumed that higher EPIC stages provide more reliable data estimates. The weights at each stage could be varied and predefined in different systems by trial-and-error simulations on training sequences. Furthermore, the weights could be optimized by adaptive schemes.

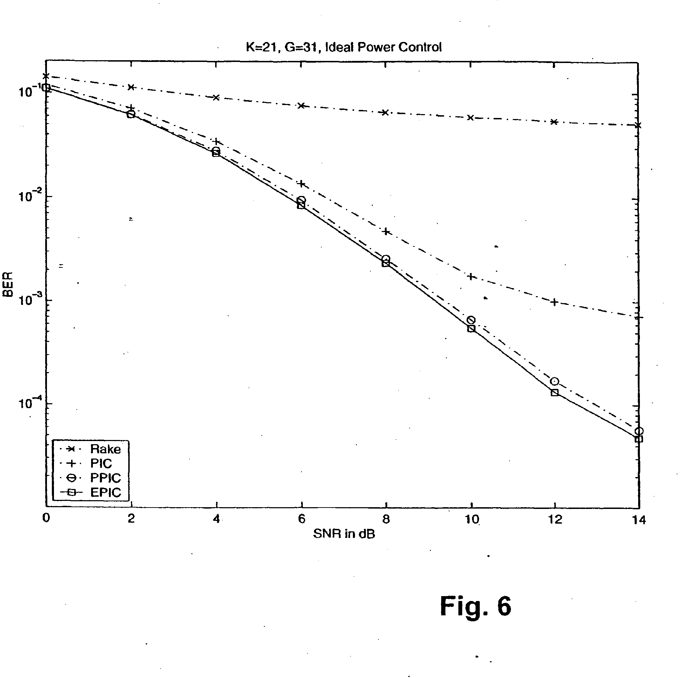

Figs. 6 to 9 show simulation results of bit-error-rates (BER) as a function of the signal to noise ratio, the bit error rates being obtained by a rake receiver alone, a conventional 3-stage PIC detector, a conventional 3-stage PPIC detector with $\omega_m=[0.5;0.7;0.9]$ and the EPIC detector according to the preferred embodiment of the present invention.

Fig. 6 shows the respective bit-error-rates for the uplink direction and a perfect channel estimation, the number of paths being equal to one, in case of 21 users with ideal power control and a 31-bit Gold code as spreading code.

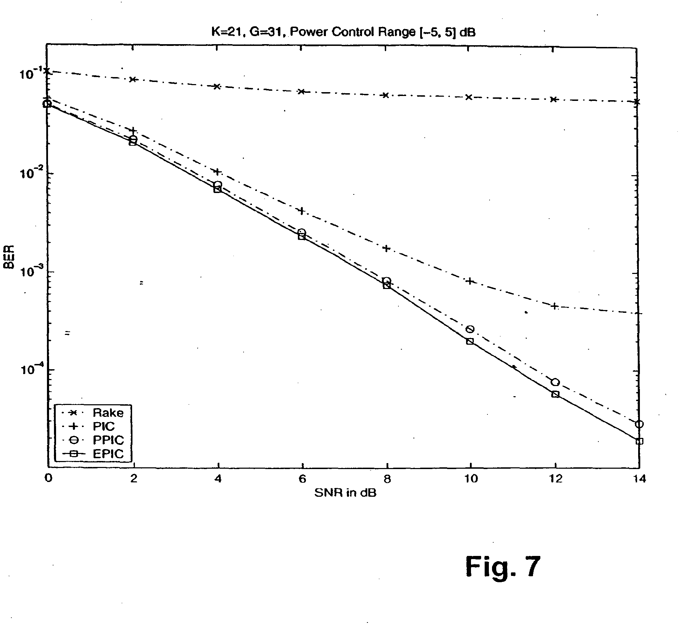

Fig. 7 shows the respective bit-error-rates for the uplink direction and a perfect channel estimation, the number of paths being equal to one, in case of 21 users with a power control in the range of [-5,+5]dB and a 31-bit Gold code as spreading code.

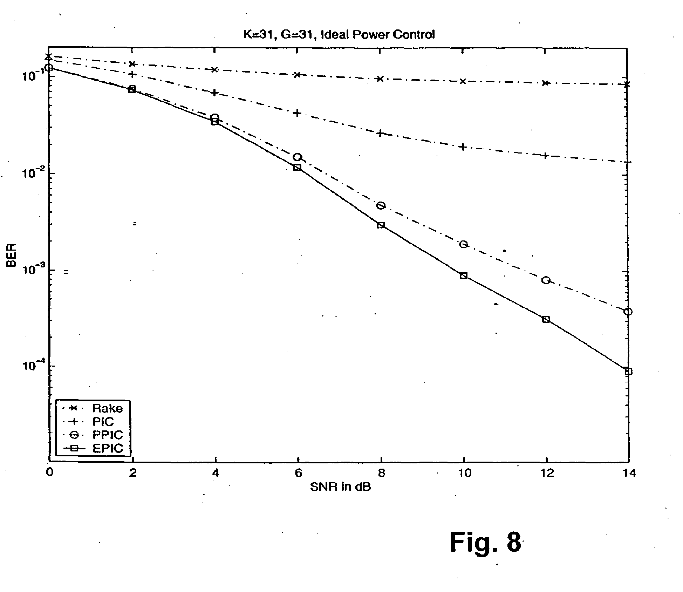

Fig. 8 shows the respective bit-error-rates for the uplink direction and a perfect channel estimation, the number of paths being equal to one, in case of 31 users with ideal power control and a 31-bit Gold code as spreading code.

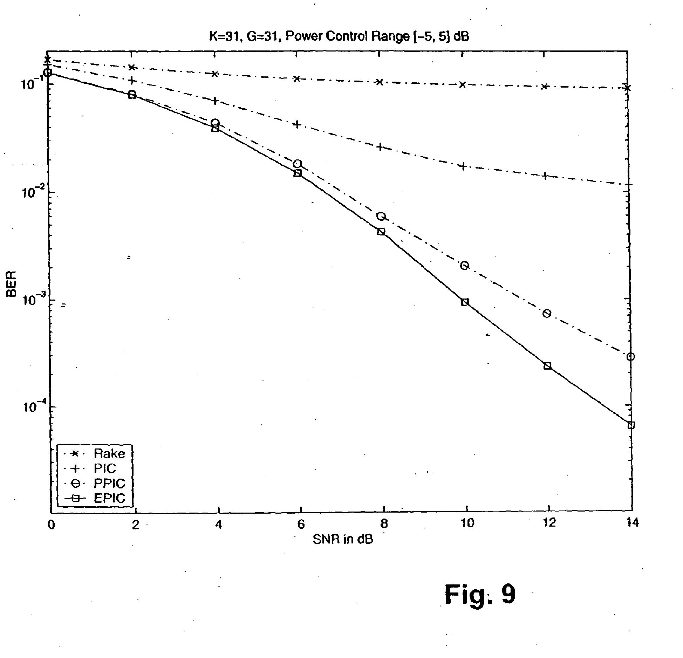

Fig. 9 shows the respective bit-error-rates for the uplink direction and a perfect channel estimation, the number of paths being equal to one, in case of 31 users with a power control in the range of [-5,+5]dB and a 31-bit Gold code as spreading code.

As can be seen from Figs. 6 to 9, the EPIC detector according to the preferred embodiment significantly outperforms the conventional PIC and PPIC detectors. With the EPIC detector according to the present invention, the system performance can be considerably improved especially in heavily loaded systems.

While the invention has been described with reference to a preferred embodiment, the description is illustrative of the invention and is not to be construed as limiting the invention. Various modifications and applications may occur to those skilled in the art without departing from the scope of the invention as defined by the appended claims.

## Claims

1. A method of detecting a spread spectrum composite signal ($r$) comprising plural user signals ($b_1, b_2, ..,b_K$) that have been spread with spreading codes, said method comprising the steps of:

   a) receiving the composite signal ($r$) at a rake receiver;
   b) obtaining a rake receiver output $z_{\text{Rake}} = A^H S^H r$;
   c) producing first hard-decision values $b_{\text{rake}} =\text{sgn}(z_{\text{Rake})}$ on the basis of the rake receiver output $z_{\text{Rake}}$;
   d) producing first parallel interference cancellation values $z_{\text{Rake}}-Fb_{\text{Rake}}$ on the basis of $z_{\text{Rake}}$;
   e) producing second hard-decision values $b_{\text{PIC}} =\text{sgn}(z_{\text{Rake}}-Fb_{\text{Rake}})$ on the basis of the first parallel interference cancellation values;
   f) producing first combination values $\hat{b}$ by combining the hard-decision values $b_{\text{Rake}}$ and $b_{\text{PIC}}$;
   g) producing second parallel interference cancellation values $z_{\text{Rake}}-F\hat{b}$ on the basis of the first combination values $\hat{b}$; and
   h) producing third hard-decision values $\hat{b}_{\text{EPIC}}(1) =\text{sgn}(z_{\text{Rake}}-F\hat{b})$ on the basis of the second parallel interference cancellation values, $\hat{b}_{\text{EPIC}}(1)$ being considered to be the output of the equalized parallel interference cancellation (EPIC) detector at a first stage,

   wherein the first parallel interference cancellation values are produced by regenerating the induced multiple access interference (MAI) in accordance with:

$$MAI_1 = Fb_{Rake}$$
$$F = A^H S^H SA - diag([A^H S^H SA]_{ii})$$

wherein:
$S$ = spreading code matrix;
$A$ = channel coefficient matrix;
$()^H$ = conjugate transpose operation; and
$F$ = off-diagonal cross-correlation matrix.

2. A method according to claim 1, further comprising the steps of:

    i) combining the hard-decision values $b_{EPIC}(m)$ (m=2,3,..,L) at $m^{th}$ stage with the hard-decision values of equalized parallel interference cancellation values $b_{EpIC}(m-1)$ at $(m-1)^{th}$ stage for producing $m^{th}$ combination values $\hat{b}(m)$;
    j) producing $(m+1)^{th}$ parallel interference cancellation values on the basis of the $m^{th}$ combination values $\hat{b}(m)$; and
    k) producing hard-decision values $b_{EPIC}(m+1)$ at $(m+1)^{th}$ stage on the basis of the $(m+1)^{th}$ parallel interference cancellation values.

3. A method according to claim 1, wherein, for $k^{th}$ user, in case the first hard-decision value equals the second hard-decision value, the second hard-decision value is used as the first combination value,
and wherein in case the first hard-decision value does not equal the second hard-decision value, the first combination value for the $k^{th}$ user is produced by weighting the second hard-decision value with $(2\omega_1-1)$, wherein $\omega_1$ is a weighting factor, wherein the second parallel interference cancellation values are produced by regenerating the induced multiple access interference (MAI) in accordance with:

$$MAI_2 = F[\omega_1 b_{PIC} + (1-\omega_1)b_{Rake})] \quad = F[\,(2\omega_1-1)\,b_{PIC}]\,\text{if}\ \ [b_{Rake}]_k \neq [b_{PIC}]_k$$

$$= F b_{PIC} \quad\quad\quad \text{if}\ \ [b_{Rake}]_k = [b_{PIC}]_k.$$

4. A method according to claim 2, wherein the steps i) to k) are repeated a predetermined number of times.

5. A method according to claim 2, wherein the steps i) to k) are repeated until a predetermined bit-error-rate is reached.

6. A method according to claim 1, wherein
the first combination values are produced by summing the first and second hard-decision values which are weighted by $(1-\omega_1)$ and $\omega_1$, respectively, wherein $\omega_1$ is a weighting factor.

7. A method according to claim 2, wherein step i) comprises the steps of:

    producing the $m^{th}$ combination values by summing the $(m)^{th}$ and $(m+1)^{th}$ hard-decision values which are weighted by $(1-\omega_m)$ and $\omega_m$, respectively, wherein $\omega_m$ is a weighting factor.

8. A method according to claim 2, wherein step i) comprises the steps of:

    comparing the $m^{th}$ hard-decision values and the $(m-1)^{th}$ hard-decision values of EPIC detector for each user, wherein, for user k, in case the $m^{th}$ hard-decision value equals the $(m-1)^{th}$ hard-decision value, the $m^{th}$ hard-decision value is used as the $m^{th}$ combination value,
    and wherein in case the $m^{th}$ hard-decision value does not equal the $(m-1)^{th}$ hard-decision value, the $m^{th}$ combination value is produced by weighting the $m^{th}$ hard-decision value with $(2\omega_m-1)$, wherein $\omega_m$ is a weighting factor.

9. A method according to claim 7, wherein the $m^{th}$ weighting factor is larger than a $(m-1)^{th}$ weighting factor.

10. A method according to claim 8, wherein the $(m+1)^{th}$ parallel interference cancellation values are produced by regenerating the induced multiple access interference (MAI) in accordance with:

$$MAI_{m+1} \quad = \quad F[\,(2\omega_m-1)\,b_{\text{EPIC}}(m-1)\,]\quad \text{if}\ \ [b_{\text{Rake}}]_k \neq [b_{\text{PIC}}]_k$$

$$= \quad Fb_{\text{EPIC}}(m-1)\qquad\qquad \text{if}\ \ [b_{\text{Rake}}]_k = [b_{\text{PIC}}]_k.$$

**11.** A method according to claim 6 or 7, wherein the weighting factors at each stage m are varied and predefined in different systems by trial-and-error simulations on training sequences and optimized by adaptive schemes.

**12.** A method according to claim 6 or 7, wherein the weighting factors are defined by power of 2.

**13.** A detecting device for detecting a spread spectrum composite signal ($r$) comprising plural user signals ($b_1, b_2, .., b_K$) that have been spread with spreading codes, the composite signal ($r$) being received at a rake receiver which provides a rake receiver output $z_{\text{Rake}}= A^H S^H r$, said detecting device being arranged to:

a) produce first hard-decision values $b_{\text{Rake}} = \text{sgn}(z_{\text{Rake}})$ on the basis of the rake receiver output $z_{\text{Rake}}$;
b) produce first parallel interference cancellation values $z_{\text{Rake}}-Fb_{\text{Rake}}$ on the basis of $b_{\text{Rake}}$;
c) produce second hard-decision values $b_{\text{PIC}} = \text{sgn}(z_{\text{Rake}}-Fb_{\text{Rake}})$ on the basis of the first parallel interference cancellation values;
d) produce first combination values $\hat{b}$ by combining the hard-decision values $b_{\text{Rake}}$ and $b_{\text{PIC}}$;
e) produce second parallel interference cancellation values $z_{\text{Rake}}-F\hat{b}$ on the basis of the first combination values $\hat{b}$; and
f) produce third hard-decision values $\hat{b}_{\text{EPIC}}(1) = \text{sgn}(z_{\text{Rake}}-F\hat{b})$ on the basis of the second parallel interference cancellation values, $\hat{b}_{\text{EPIC}}(1)$ being considered to be the output of the equalized parallel interference cancellation (EPIC) detector at a first stage, wherein the device produces the first parallel interference cancellation values by regenerating the induced multiple access interference (MAI) in accordance with:

$$MAI_1 = Fb_{Rake}$$
$$F = A^H S^H S A - diag([A^H S^H S A]_{ii})$$

wherein:
$S$ = spreading code matrix;
$A$ = channel coefficient matrix;
$()^H$ = conjugate transpose operation; and
$F$ = off-diagonal cross-correlation matrix.

**14.** A device according to claim 13, further being arranged to:

g) combine the hard-decision values $b_{\text{EPIC}}(m)$ (m=2,3,..,L) at $m^{th}$ stage with the hard-decision values of equalized parallel interference cancellation values $b_{\text{EPIC}}(m-1)$ at $(m-1)^{th}$ stage for producing $m^{th}$ combination values $\hat{b}(m)$;
h) produce $(m+1)^{th}$ parallel interference cancellation values on the basis of the $m^{th}$ combination values $\hat{b}(m)$; and
i) produce hard-decision values $b_{\text{EPIC}}(m+1)$ at $(m+1)^{th}$ stage on the basis of the $(m+1)^{th}$ parallel interference cancellation values.

**15.** A device according to claim 13, wherein, for $k^{th}$ user, in case the first hard-decision value equals the second hard-decision value, the device uses the second hard-decision value as the first combination value, and wherein in case the first hard-decision value does not equal the second hard-decision value, the device produces the first combination value for the $k^{th}$ user by weighting the second hard-decision value with $(2\omega_1-1)$, wherein $\omega_1$ is a weighting factor, wherein the device produces the second parallel interference cancellation values by regenerating the induced multiple access interference (MAI) in accordance with:

$$MAI_2 = F[\omega_1 b_{PIC} + (1-\omega_1)b_{Rake})] \quad = F[\,(2\omega_1-1)\,b_{\mathrm{PIC}}]\,\text{if}\; [b_{\mathrm{Rake}}]_k \neq [b_{\mathrm{PIC}}]_k$$

$$= F b_{\mathrm{PIC}} \qquad \text{if}\; [b_{\mathrm{Rake}}]_k = [b_{\mathrm{PIC}}]_k.$$

**16.** A device according to claim 14, wherein the device repeats the steps g) to i) a predetermined number of times.

**17.** A device according to claim 14, wherein the device repeats the steps g) to i) until a predetermined bit-error-rate is reached.

**18.** A device according to claim 13, wherein
the first combination values are produced by summing the first and second hard-decision values which are weighted by (1-$\omega_1$) and $\omega_1$, respectively, wherein $\omega_1$ is a weighting factor.

**19.** A device according to claim 14, wherein in performing step g) the device is arranged to:

produce the $m^{th}$ combination values by summing the $(m)^{th}$ and $(m+1)^{th}$ hard-decision values which are weighted by (1-$\omega_m$) and $\omega_m$, respectively, wherein $\omega_m$ is a weighting factor.

**20.** A device according to claim 14, wherein in performing step g) the device is arranged to:

compare the $m^{th}$ hard-decision values and the $(m-1)^{th}$ hard-decision values of EPIC detector for each user, wherein, for user k, in case the $m^{th}$ hard-decision value equals the $(m-1)^{th}$ hard-decision value, the device uses the $m^{th}$ hard-decision value as the $m^{th}$ combination value,
and wherein in case the $m^{th}$ hard-decision value does not equal the $(m-1)^{th}$ hard-decision value, the device produces the $m^{th}$ combination value by weighting the $m^{th}$ hard-decision value with ($2\omega_m$-1), wherein $\omega_m$ is a weighting factor.

**21.** A device according to claim 20, wherein the $m^{th}$ weighting factor is larger than a $(m-1)^{th}$ weighting factor.

**22.** A device according to claim 20, wherein the device produces the $(m+1)^{th}$ parallel interference cancellation values by regenerating the induced multiple access interference (MAI) in accordance with:

$$MAI_{m+1} \quad = \quad F[\,(2\omega_m-1)\,b_{\mathrm{EPIC}}(m-1)]\;\; \text{if}\; [b_{\mathrm{Rake}}]_k \neq [b_{\mathrm{PIC}}]_k$$

$$= \quad F b_{\mathrm{EPIC}}(m-1) \qquad\qquad \text{if}\; [b_{\mathrm{Rake}}]_k = [b_{\mathrm{PIC}}]_k.$$

**23.** A device according to claim 18 or 19, wherein the weighting factors at each stage m are varied and predefined in different systems by trial-and-error simulations on training sequences and optimized by adaptive schemes.

**24.** A device according to claim 18 or 19, wherein the weighting factors are defined by power of 2.

**25.** An apparatus comprising a rake receiver and a detecting device according to any one of claims 13 to 24.

**Patentansprüche**

**1.** Verfahren zur Erfassung eines zusammengesetzten Spreizspektrumsignals (*r*), das eine Vielzahl von Benutzersignalen (*$b_1$,$b_2$, ..,$b_K$*) umfasst, die mit Spreizungscodes gespreizt sind, mit den Schritten

a) Empfangen des zusammengesetzten Signals (*r*) an einem Rake-Empfänger,
b) Erhalten eines Rake-Empfängerausgangssignals $z_{Rake}$= $A^H S^H r$,
c) Erzeugen erster harter Entscheidungswerte $b_{Rake}$ =sgn($z_{Rake}$) auf der Grundlage des Rake-Empfängerausgangssignals $z_{Rake}$,

EP 1 892 842 B1

d) Erzeugen erster paralleler Störunterdrückungswerte $z_{Rake}$-$Fb_{Rake}$ auf der Grundlage von $b_{Rake}$,

e) Erzeugen zweiter harter Entscheidungswerte $b_{PIC}$ =sgn($z_{Rake}$-$Fb_{Rake}$) auf der Grundlage der ersten parallelen Störunterdrückungswerte,

f) Erzeugen erster Kombinationswerte $\hat{b}$ durch Kombinieren der ersten und zweiten harten Entscheidungswerte $b_{Rake}$ und $b_{PIC}$,

g) Erzeugen zweiter paralleler Störunterdrückungswerte $z_{Rake}$-$F\hat{b}$ auf der Grundlage der ersten Kombinationswerte $\hat{b}$, und

h) Erzeugen dritter harter Entscheidungswerte $\hat{b}_{EPIC}(1)$=sgn($z_{Rake}$-$F\hat{b}$) auf der Grundlage der zweiten parallelen Störunterdrückungswerte, wobei der dritte harte Entscheidungswert $\hat{b}_{EPIC}(1)$ als das Ausgangssignal der entzerrten parallelen Störunterdrückungs-(EPIC-) Erfassungseinrichtung an einer ersten Stufe betrachtet wird,

wobei die ersten parallelen Störunterdrückungswerte durch Regenerieren der erzeugten Mehrfachzugriffsstörung (MAI) erzeugt werden gemäß

$$MAI_1 = Fb_{Rake}$$

$$F = A^H S^H SA - diag([A^H S^H SA]_{ii}),$$

mit:

$S$ = Spreizungscodematrix,
$A$ = Kanalkoeffizientenmatrix,
$()^H$ = Adjungieroperation, und
$F$ = nichtdiagonale Kreuzkorrelationsmatrix.

2. Verfahren nach Anspruch 1, ferner mit den Schritten

i) Kombinieren der harten Entscheidungswerte $b_{EPIC}(m)$ (m=2,3,..,L) an einer m-ten Stufe mit den harten Entscheidungswerten entzerrter paralleler Störunterdrückungswerte $b_{EPIC}(m-1)$ an einer (m-1)-ten Stufe zur Erzeugung m-ter Kombinationswerte $\hat{b}(m)$,

j) Erzeugen von (m+1)-ten parallelen Störunterdrückungswerten auf der Grundlage der m-ten Kombinationswerte $\hat{b}(m)$, und

k) Erzeugen harter Entscheidungswerte $b_{EPIC}(m+1)$ an einer (m+1)-ten Stufe auf der Grundlage der (m+1)-ten parallelen Störunterdrückungswerte.

3. Verfahren nach Anspruch 1, wobei für einen k-ten Benutzer im Fall, dass der erste harte Entscheidungswert gleich dem zweiten harten Entscheidungswert ist, der zweite harte Entscheidungswert als der erste Kombinationswert verwendet wird,

und wobei im Fall, dass der erste harte Entscheidungswert nicht gleich dem zweiten harten Entscheidungswert ist, der erste Kombinationswert für den k-ten Benutzer durch Gewichten des zweiten harten Entscheidungswerts mit ($2\omega_1$-1) erzeugt wird, wobei $\omega_1$ ein Gewichtungsfaktor ist, wobei die zweiten parallelen Störunterdrückungswerte durch Regenerieren der erzeugten Mehrfachzugriffsstörung (MAI) erzeugt werden gemäß

$$MAI_2 = F[\omega_1 b_{PIC} + (1-\omega_1)b_{Rake})] = F[(2\omega_1-1)b_{PIC}] \quad \text{wenn} \quad [b_{Rake}]_k \neq [b_{PIC}]_k$$

$$= Fb_{PIC} \qquad \text{wenn} \quad [b_{Rake}]_k = [b_{PIC}]_k.$$

4. Verfahren nach Anspruch 2, wobei die Schritte i) bis k) eine vorbestimmte Anzahl oft wiederholt werden.

5. Verfahren nach Anspruch 2, wobei die Schritte i) bis k) wiederholt werden, bis eine vorbestimmte Bitfehlerrate erreicht ist.

6. Verfahren nach Anspruch 1, wobei

die ersten Kombinationswerte durch Summieren der ersten und zweiten harten Entscheidungswerte erzeugt werden, die jeweils mit (1-$\omega_1$) und $\omega_1$ gewichtet sind, wobei $\omega_1$ ein Gewichtungsfaktor ist.

7. Verfahren nach Anspruch 2, wobei Schritt i) den Schritt umfasst
   Erzeugen der m-ten Kombinationswerte durch Summieren der m-ten und (m+1)-ten harten Entscheidungswerte, die jeweils mit (1-$\omega_m$) und $\omega_m$ gewichtet sind, wobei $\omega_m$ ein Gewichtungsfaktor ist.

8. Verfahren nach Anspruch 2, wobei Schritt i) die Schritte umfasst
   Vergleichen der m-ten harten Entscheidungswerte und der (m-1)-ten harten Entscheidungswerte der EPIC-Erfassungseinrichtung für jeden Benutzer,
   wobei für einen Benutzer k im Fall, dass der m-te harte Entscheidungswert gleich dem (m-1)-ten harten Entscheidungswert ist, der m-te harte Entscheidungswert als der m-te Kombinationswert verwendet wird,
   und wobei im Fall, dass der m-te harte Entscheidungswert nicht gleich dem (m-1)-ten harten Entscheidungswert ist, der m-te Kombinationswert durch Gewichten des m-ten harten Entscheidungswerts mit (2$\omega_m$-1) erzeugt wird, wobei $\omega_m$ ein Gewichtungsfaktor ist.

9. Verfahren nach Anspruch 7, wobei der m-te Gewichtungsfaktor größer als ein (m-1)-ter Gewichtungsfaktor ist.

10. Verfahren nach Anspruch 8, wobei die (m+1)-ten parallelen Störunterdrückungswerte durch Regenerieren der erzeugten Mehrfachzugriffsstörung (MAI) erzeugt werden gemäß

$$
\begin{aligned}
\boldsymbol{MAI}_{m+1} \quad &= \quad \boldsymbol{F}[\,(2\omega_m-1)\,\boldsymbol{b}_{\texttt{EPIC}}(m-1)\,] \quad \texttt{wenn} \quad [\boldsymbol{b}_{\texttt{Rake}}]_k \neq [\boldsymbol{b}_{\texttt{PIC}}]_k \\
&= \quad \boldsymbol{Fb}_{\texttt{EPIC}}(m-1) \quad\quad\quad\quad \texttt{wenn} \quad [\boldsymbol{b}_{\texttt{Rake}}]_k = [\boldsymbol{b}_{\texttt{PIC}}]_k.
\end{aligned}
$$

11. Verfahren nach Anspruch 6 oder 7, wobei die Gewichtungsfaktoren an jeder Stufe m in verschiedenen Systemen durch Versuchs- und -Irrtumssimulationen bei Trainingssequenzen verändert und vordefiniert und durch adaptive Schemata optimiert werden.

12. Verfahren nach Anspruch 6 oder 7, wobei die Gewichtungsfaktoren durch Potenzen von 2 definiert sind.

13. Erfassungseinrichtung zur Erfassung eines zusammengesetzten Spreizspektrumsignals ($r$), das eine Vielzahl von Benutzersignalen ($b_1, b_2, .., b_K$) umfasst, die mit Spreizungscodes gespreizt sind, wobei das zusammengesetzte Signals ($r$) an einem Rake-Empfänger empfangen wird, der zur Bereitstellung eines Rake-Empfängerausgangssignals $z_{\text{Rake}} = A^H S^H r$ eingerichtet ist, wobei die Erfassungseinrichtung eingerichtet ist zum

    a) Erzeugen erster harter Entscheidungswerte $b_{\text{Rake}} = \text{sgn}(z_{\text{Rake}})$ auf der Grundlage des Rake-Empfängerausgangssignals $z_{\text{Rake}}$,
    b) Erzeugen erster paralleler Störunterdrückungswerte $z_{\text{Rake}} - Fb_{\text{Rake}}$ auf der Grundlage von $b_{\text{Rake}}$,
    c) Erzeugen zweiter harter Entscheidungswerte $b_{\text{PIC}} = \text{sgn}(z_{\text{Rake}} - Fb_{\text{Rake}})$ auf der Grundlage der ersten parallelen Störunterdrückungswerte,
    d) Erzeugen erster Kombinationswerte $\hat{b}$ durch Kombinieren der harten Entscheidungswerte $b_{\text{Rake}}$ und $b_{\text{PIC}}$,
    e) Erzeugen zweiter paralleler Störunterdrückungswerte $z_{\text{Rake}} - F\hat{b}$ auf der Grundlage der ersten Kombinationswerte $\hat{b}$, und
    f) Erzeugen dritter harter Entscheidungswerte $\hat{b}_{\text{EPIC}}(1) = \text{sgn}(z_{\text{Rake}} - F\hat{b})$ auf der Grundlage der zweiten parallelen Störunterdrückungswerte, wobei $\hat{b}_{\text{EPIC}}(1)$ als das Ausgangssignal der entzerrten parallelen Störunterdrückungs-(EPIC-) Erfassungseinrichtung an einer ersten Stufe betrachtet wird, wobei die Einrichtung die ersten parallelen Störunterdrükkungswerte durch Regenerieren der erzeugten Mehrfachszugriffsstörung (MAI) erzeugt gemäß:

$$
MAI_1 = Fb_{Rake}
$$
$$
F = A^H S^H SA - diag([A^H S^H SA]_{ii}),
$$

mit:

> $S$ = Spreizungscodematrix,
> $A$ = Kanalkoeffizientenmatrix,
> $()^H$ = Adjungieroperation, und
> $F$ = nichtdiagonale Kreuzkorrelationsmatrix.

**14.** Einrichtung nach Anspruch 13, ferner eingerichtet zum

> g) Kombinieren der harten Entscheidungswerte $b_{PIC}(m)$ (m=2,3,..,L) an einer m-ten Stufe mit den harten Entscheidungswerten entzerrter paralleler Störunterdrückungswerte $b_{EPI}(m-1)$ an einer (m-1)-ten Stufe zur Erzeugung m-ter Kombinationswerte $\hat{b}(m)$,
> h) Erzeugen von (m+1)-ten parallelen Störunterdrückungswerten auf der Grundlage der m-ten Kombinationswerte $\hat{b}(m)$, und
> i) Erzeugen harter Entscheidungswerte $b_{EPIC}(m+1)$ an einer (m+1)-ten Stufe auf der Grundlage der (m+1)-ten parallelen Störunterdrückungswerte.

**15.** Einrichtung nach Anspruch 13, wobei für einen k-ten Benutzer im Fall, dass der erste harte Entscheidungswert gleich dem zweiten harten Entscheidungswert ist, die Einrichtung den zweiten harten Entscheidungswert als den ersten Kombinationswert verwendet,
und wobei im Fall, dass der erste harte Entscheidungswert nicht gleich dem zweiten harten Entscheidungswert ist, die Einrichtung den ersten Kombinationswert für den k-ten Benutzer durch Gewichten des zweiten harten Entscheidungswerts mit $(2\omega_1-1)$ erzeugt, wobei $\omega_1$ ein Gewichtungsfaktor ist, wobei die Einrichtung die zweiten parallelen Störunterdrückungswerte durch Regenerieren der erzeugten Mehrfachzugriffsstörung (MAI) erzeugt gemäß

$$MAI_2 = F[\omega_1 b_{PIC} + (1-\omega_1) b_{Rake})] = F[(2\omega_1-1) b_{PIC}] \quad \text{wenn} \quad [b_{Rake}]_k \neq [b_{PIC}]_k$$
$$= F b_{PIC} \qquad\qquad \text{wenn} \quad [b_{Rake}]_k = [b_{PIC}]_k.$$

**16.** Einrichtung nach Anspruch 14, wobei die Einrichtung die Schritte g) bis i) eine vorbestimmte Anzahl oft wiederholt.

**17.** Einrichtung nach Anspruch 14, wobei die Einrichtung die Schritte g) bis i) wiederholt, bis eine vorbestimmte Bitfehlerrate erreicht ist.

**18.** Einrichtung nach Anspruch 13, wobei
die ersten Kombinationswerte durch Summieren der ersten und zweiten harten Entscheidungswerte erzeugt werden, die jeweils mit $(1-\omega_1)$ und $\omega_1$ gewichtet sind, wobei $\omega_1$ ein Gewichtungsfaktor ist.

**19.** Einrichtung nach Anspruch 14, wobei beim Durchführen von Schritt g) die Einrichtung eingerichtet ist zum Erzeugen der m-ten Kombinationswerte durch Summieren der m-ten und (m+1)-ten harten Entscheidungswerte, die jeweils mit $(1-\omega_m)$ und $\omega_m$ gewichtet sind, wobei $\omega_m$ ein Gewichtungsfaktor ist.

**20.** Einrichtung nach Anspruch 14, wobei beim Durchführen von Schritt g) die Einrichtung eingerichtet ist zum Vergleichen der m-ten harten Entscheidungswerte und der (m-1)-ten harten Entscheidungswerte der EPIC-Erfassungseinrichtung für jeden Benutzer,
wobei für einen Benutzer k im Fall, dass der m-te harte Entscheidungswert gleich dem (m-1)-ten harten Entscheidungswert ist, die Einrichtung den m-ten harten Entscheidungswert als den m-ten Kombinationswert verwendet,
und wobei im Fall, dass der m-te harte Entscheidungswert nicht gleich dem (m-1)-ten harten Entscheidungswert ist, die Einrichtung den m-ten Kombinationswert durch Gewichten des m-ten harten Entscheidungswerts mit $(2\omega_m-1)$ erzeugt, wobei $\omega_m$ ein Gewichtungsfaktor ist.

**21.** Einrichtung nach Anspruch 20, wobei der m-te Gewichtungsfaktor größer als ein (m-1)-ter Gewichtungsfaktor ist.

**22.** Einrichtung nach Anspruch 20, wobei die Einrichtung die (m+1)-ten parallelen Störunterdrückungswerte durch Regenerieren der erzeugten Mehrfachzugriffsstörung (MAI) erzeugt gemäß

$$MAI_{m+1} \quad = \quad F[(2\omega_m-1)b_{\text{EPIC}}(m-1)] \quad \text{wenn } [b_{\text{Rake}}]_k \neq [b_{\text{PIC}}]_k$$
$$= \quad Fb_{\text{EPIC}}(m-1) \qquad \text{wenn } [b_{\text{Rake}}]_k = [b_{\text{PIC}}]_k.$$

**23.** Einrichtung nach Anspruch 18 oder 19, wobei die Gewichtungsfaktoren an jeder Stufe m in verschiedenen Systemen durch Versuchs- und -Irrtumssimulationen bei Trainingssequenzen verändert und vordefiniert und durch adaptive Schemata optimiert werden.

**24.** Einrichtung nach Anspruch 18 oder 19, wobei die Gewichtungsfaktoren durch Potenzen von 2 definiert sind.

**25.** Vorrichtung mit einem Rake-Empfänger und einer Erfassungseinrichtung nach einem der Ansprüche 13 bis 24.

**Revendications**

**1.** Procédé pour détecter un signal composite à spectre étalé (r) comprenant une pluralité de signaux d'utilisateur ($b_1$, $b_2$,..., $b_k$) qui ont été étalés avec des codes d'étalement, ledit procédé comprenant les étapes consistant à :

   a) recevoir le signal composite (r) au niveau d'un récepteur en râteau ;
   b) obtenir une sortie du récepteur en râteau $z_{\text{râteau}} = A^H S^H r$ ;
   c) produire des premières valeurs de décision ferme $b_{\text{râteau}} = \text{sgn}(z_{\text{râteau}})$ sur la base de la sortie du récepteur en râteau $z_{\text{râteau}}$ ;
   d) produire des premières valeurs d'annulation d'interférence parallèle $z_{\text{râteau}}-Fb_{\text{râteau}}$ sur la base de $b_{\text{râteau}}$ ;
   e) produire des secondes valeurs de décision ferme $b_{\text{PIC}} = \text{sgn}(z_{\text{râteau}} - Fb_{\text{râteau}})$ sur la base des premières valeurs d'annulation d'interférence parallèle ;
   f) produire des premières valeurs de combinaison $\hat{b}$ en combinant la première et la seconde valeurs de décision ferme $b_{\text{râteau}}$ et $b_{\text{PIC}}$ ;
   g) produire des secondes valeurs d'annulation d'interférence parallèle $z_{\text{râteau}}-F\hat{b}$ sur la base des premières valeurs de combinaison $\hat{b}$ ; et
   h) produire des troisièmes valeurs de décision ferme $\hat{b}_{\text{EPIC}}(1) = \text{sgn}(z_{\text{râteau}}-F\hat{b})$ sur la base des secondes valeurs d'annulation d'interférence parallèle, $\hat{b}_{\text{EPIC}}(1)$ étant considérée comme étant la sortie du détecteur d'annulation d'interférence parallèle égalisée (EPIC) à un premier étage,

où les premières valeurs d'annulation d'interférence sont produites en régénérant l'interférence d'accès multiple induite (MAI) selon:

$$MAI_1 = Fb_{Rake}$$
$$F = A^H S^H SA\text{-}diag([A^H S^H SA]_{ii})$$

où :

   S = matrice de codes d' étalement ;
   A = matrice de coefficients de canal ;
   $( )^H$ = opération de transposition de conjugué ;
   F = matrice d'intercorrélation non diagonale.

**2.** Procédé selon la revendication 1, comprenant en outre les étapes consistant à :

   i) combiner les valeurs de décision ferme $b_{\text{EPIC}}(m)$ (m = 2, 3, ..., L) à un $m^{\text{ième}}$ étage avec les valeurs de décision ferme des valeurs d'annulation d'interférence parallèle égalisée $b_{\text{EPIC}}(m-1)$ à un $(m-1)^{\text{ième}}$ étage pour produire les $m^{\text{ièmes}}$ valeurs de combinaison $\hat{b}(m)$ ;
   j) produire les $(m+1)^{\text{ièmes}}$ valeurs d'annulation d'interférence parallèle sur la base des $m^{\text{ièmes}}$ valeurs de combinaison $\hat{b}(m)$ ; et

k) produire les valeurs de décision ferme $b_{EPIC}(m+1)$ au $(m+1)^{ième}$ étage sur la base des $(m+1)^{ièmes}$ valeurs d'annulation d'interférence parallèle.

3. Procédé selon la revendication 1, dans lequel pour le $k^{ième}$ utilisateur, dans le cas où la première valeur de décision ferme est égale à la seconde valeur de décision ferme, la seconde valeur de décision ferme est utilisée en tant que première valeur de combinaison
et dans lequel, dans le cas où la première valeur de décision ferme n'est pas égale à la seconde valeur de décision ferme, la première valeur de combinaison pour le $k^{ième}$ utilisateur est produite en pondérant la seconde valeur de décision ferme par $(2\omega_1-1)$, où $\omega_1$ est un facteur de pondération, dans lequel les secondes valeurs d'annulation d'interférence parallèle sont produites en régénérant l'interférence d'accès multiple induit (MAI) selon

$$MAI_2 = F[\omega_1\, b_{PIC} + (1-\omega_1\,)b_{Rake}]] = F[(2\omega_1-1)b_{PIC}]\ \text{si}\ [b_{Rake}]_k \neq [b_{PIC}]_k$$
$$= Fb_{PIC}\qquad\qquad \text{si}\ [b_{Rake}]_k = [b_{PIC}]_k.$$

4. Procédé selon la revendication 2, dans lequel les étapes i) à k) sont répétées un nombre prédéterminé de fois.

5. Procédé selon la revendication 2, dans lequel les étapes i) à k) sont répétées jusqu'à ce qu'un taux d'erreurs sur les bits prédéterminé soit atteint.

6. Procédé selon la revendication 1, dans lequel
les premières valeurs de combinaison sont produites en sommant les premières et seconde valeurs de décision ferme qui sont pondérées par $(1-\omega_1)$ et $\omega_1$, respectivement, où $\omega 1$ est un facteur de pondération.

7. Procédé selon la revendication 2, dans lequel l'étape i) comprend les étapes consistant à :
produire les $m^{ièmes}$ valeurs de combinaison en sommant les $m^{ièmes}$ et les $(m+1)^{ièmes}$ valeurs de décision ferme qui sont pondérées par $(1-\omega_m)$ et $(\omega_m$, respectivement, où $\omega_m$ est un facteur de pondération.

8. Procédé selon la revendication 2, dans lequel l'étape i) comprend les étapes consistant à :

comparer les $m^{ièmes}$ valeurs de décision ferme et les $(m-1)^{ièmes}$ valeurs de décision ferme du détecteur EPIC pour chaque utilisateur,
où pour un utilisateur k, dans le cas où la $m^{ième}$ valeur de décision ferme est égale à la $(m-1)^{ième}$ valeur de décision ferme, la $m^{ième}$ valeur de décision ferme est utilisée comme $m^{ième}$ valeur de combinaison,
et où dans le cas où la $m^{ième}$ valeur de décision ferme n'est pas égale à la $(m-1)^{ième}$ valeur de décision ferme, la $m^{ième}$ valeur de combinaison est produite en pondérant la $m^{ième}$ valeur de décision ferme avec $(2\omega_m-1)$, où $\omega_m$, est un facteur de pondération.

9. Procédé selon la revendication 7, dans lequel le $m^{ième}$ facteur de pondération est plus grand qu'un $(m-1)^{ième}$ facteur de pondération.

10. Procédé selon la revendication 8, dans lequel les $(m+1)^{ièmes}$ valeurs d'annulation d'interférence parallèle sont produites en régénérant l'interférence d'accès multiple induite (MAI) selon :

$$MAI_{m+1}\qquad = F[(2\omega_m-1)b_{EPIC}(m-1)]\qquad\qquad \text{si}\ [b_{râteau}]_k \neq [b_{PIC}]_k$$
$$= Fb_{EPIC}(m-1)\qquad\qquad \text{si}\ [b_{râteau}]_k = [b_{PIC}]_k$$

11. Procédé selon la revendication 6 ou la revendication 7, dans lequel les facteurs de pondération à chaque étage m varient et sont prédéfinis dans différents systèmes par des simulations par approximations successives sur des séquences d'entraînement et optimisés par des schémas adaptatifs.

**12.** Procédé selon la revendication 6 ou la revendication 7, dans lequel les facteurs de pondération sont définis par des puissances de 2.

**13.** Dispositif de détection pour détecter un signal composite à spectre étalé (r) comprenant une pluralité de signaux d'utilisateur ($b_1$, $b_2$,..., $b_k$) qui ont été étalés avec des codes d'étalement, le signal composite (r) étant reçu au niveau d'un récepteur en râteau qui délivre une sortie de récepteur en râteau $z_{râteau}$ = $A^H S^H r$, ledit dispositif de détection étant conçu pour :

a) produire des premières valeurs de décision ferme $b_{râteau}$ = sgn($z_{râteau}$) sur la base de la sortie du récepteur en râteau $z_{râteau}$ ;
b) produire des premières valeurs d'annulation d'interférence parallèle $z_{râteau}$-$Fb_{râteau}$ sur la base de $b_{râteau}$ ;
c) produire des secondes valeurs de décision ferme $b_{PIC}$ = sgn($z_{râteau}$ - $Fb_{râteau}$) sur la base des premières valeurs d'annulation d'interférence parallèle ;
d) produire des premières valeurs de combinaison $\hat{b}$ en combinant les valeurs de décision ferme $b_{râteau}$ et $b_{PIC}$ ;
e) produire des secondes valeurs d'annulation d'interférence parallèle $z_{râteau}$-$F\hat{b}$ sur la base des premières valeurs de combinaison $\hat{b}$ ; et
f) produire des troisièmes valeurs de décision ferme $\hat{b}_{EPIC}(1)$ = sgn($z_{râteau}$-$F\hat{b}$) sur la base des secondes valeurs d'annulation d'interférence parallèle, $\hat{b}_{EPIC}(1)$ étant considérée comme étant la sortie du détecteur d'annulation d'interférence parallèle égalisée (EPIC) à un premier étage,

où le dispositif produit les premières valeurs d'annulation d'interférence parallèle en régénérant l'interférence d'accès multiple (MAI) induite selon :

$$MAI_1 = Fb_{Rake}$$
$$F = A^H S^H SA\text{-}diag([A^H S^H SA]_{ii})$$

où :

S = matrice de codes d'étalement ;
A = matrice de coefficients de canal ;
$()^H$ = opération de transposition de conjugué ; et
F = matrice d'intercorrélation non diagonale.

**14.** Dispositif selon la revendication 13 conçu en outre pour :

g) combiner les valeurs de décision ferme $b_{EPIC}(m)$ (m = 2, 3, ..., L) à un m$^{ième}$ étage avec les valeurs de décision ferme des valeurs d'annulation d'interférence parallèle égalisée $b_{EPIC}(m-1)$ à un (m-1)$^{ième}$ étage pour produire les m$^{ièmes}$ valeurs de combinaison $\hat{b}(m)$ ;
h) produire (m+1)$^{iemes}$ valeurs d'annulation d'interférence parallèle sur la base des m$^{ièmes}$ valeurs de combinaison $\hat{b}(m)$ ; et
i) produire les valeurs de décision ferme $b_{EPIC}(m+1)$ au (m+1)$^{ième}$ étage sur la base des (m+1)$^{ièmes}$ valeurs d'annulation d'interférence parallèle.

**15.** Dispositif selon la revendication 13, dans lequel pour le k$^{ième}$ utilisateur, dans le cas où la première valeur de décision ferme est égale à la seconde valeur de décision ferme, le dispositif utilise la seconde valeur de décision ferme en tant que première valeur de combinaison
et dans lequel, dans le cas où la première valeur de décision ferme n'est pas égale à la seconde valeur de décision ferme, la première valeur de combinaison pour le k$^{ième}$ utilisateur est produite en pondérant la seconde valeur de décision ferme par ($2\omega_1$-1), où $\omega_1$ est un facteur de pondération, dans lequel le dispositif produit les secondes valeurs d'annulation d'interférence parallèle en régénérant l'interférence d'accès multiple induit (MAI) selon

$$MAI_2 = F[\omega_1\, b_{PIC} + (1-\omega_1)b_{Rake})] = F[(2\omega_1-1)b_{PIC}] \text{ si } [b_{Rake}]_k \neq [b_{PIC}]_k$$
$$= Fb_{PIC} \qquad \text{si } [b_{Rake}]_k = [b_{PIC}]_k.$$

**16.** Dispositif selon la revendication 14, dans lequel le dispositif répète les étapes g) à i) un nombre prédéterminé de fois.

**17.** Dispositif selon la revendication 14, dans lequel le dispositif répète les étapes g) à i) jusqu'à ce qu'un taux d'erreurs sur les bits prédéterminé soit atteint.

**18.** Dispositif selon la revendication 13, dans lequel
les premières valeurs de combinaison sont produites en sommant les premières et seconde valeurs de décision ferme qui sont pondérées par $(1-\omega_1)$ et $\omega_1$, respectivement, où $\omega_1$ est un facteur de pondération.

**19.** Dispositif selon la revendication 14, dans lequel, en exécutant l'étape g), le dispositif est conçu pour :
produire les $m^{\text{ièmes}}$ valeurs de combinaison en sommant les $m^{\text{ièmes}}$ et les $(m+1)^{\text{ièmes}}$ valeurs de décision ferme qui sont pondérées par $(1-\omega_m)$ et $\omega_m$, respectivement, où $\omega_m$ est un facteur de pondération.

**20.** Dispositif selon la revendication 14, dans lequel, en exécutant l'étape g), le dispositif est conçu pour :

comparer les $m^{\text{ièmes}}$ valeurs de décision ferme et les $(m-1)^{\text{ièmes}}$ valeurs de décision ferme du détecteur EPIC pour chaque utilisateur,
où, pour un utilisateur k, dans le cas où la $m^{\text{ième}}$ valeur de décision ferme est égale à la $(m-1)^{\text{ième}}$ valeur de décision ferme, le dispositif utilise la $m^{\text{ième}}$ valeur de décision ferme comme $m^{\text{ième}}$ valeur de combinaison,
et où dans le cas où la $m^{\text{ième}}$ valeur de décision ferme n'est pas égale à la $(m-1)^{\text{ième}}$ valeur de décision ferme, le dispositif produit la $m^{\text{ième}}$ valeur de combinaison en pondérant la $m^{\text{ième}}$ valeur de décision ferme avec $(2\omega_m-1)$, où $\omega_m$ est un facteur de pondération.

**21.** Dispositif selon la revendication 20, dans lequel le $m^{\text{ième}}$ facteur de pondération est plus grand qu'un $(m-1)^{\text{ième}}$ facteur de pondération.

**22.** Dispositif selon la revendication 20, dans lequel le dispositif produit les $(m+1)^{\text{ièmes}}$ valeurs d'annulation d'interférence parallèle en régénérant l'interférence d'accès multiple induite (MAI) selon :

$$MAI_{m+1} \qquad = F[(2\omega_m-1)b_{EPIC}(m-1)] \qquad \text{si } [b_{râteau}]_k \neq [b_{PIC}]_k$$
$$= Fb_{EPIC}(m-1) \qquad \text{si } [b_{râteau}]_k = [b_{PIC}]_k$$

**23.** Dispositif selon la revendication 18 ou la revendication 19, dans lequel les facteurs de pondération à chaque étage m varient et sont prédéfinis dans différents systèmes par des simulations par approximations successives sur des séquences d'entraînement et optimisés par des schémas adaptatifs.

**24.** Dispositif selon la revendication 18 ou la revendication 19, dans lequel les facteurs de pondération sont définis par des puissances de 2.

**25.** Appareil comprenant un récepteur en râteau et un dispositif de détection selon l'une quelconque des revendications 13 à 24.

Fig. 1

Prior Art

**Prior Art**

**Fig. 2**

EP 1 892 842 B1

**Prior Art**

Fig. 3

EP 1 892 842 B1

Fig. 4

Fig. 5

Fig. 6

Fig. 7

K=31, G=31, Ideal Power Control

Fig. 8

Fig. 9

**REFERENCES CITED IN THE DESCRIPTION**

**Patent documents cited in the description**

- US 5644592 A

- WO 0072459 A

**Non-patent literature cited in the description**

- **S. VERDU.** Minimum probability of error.for asynchronous Gaussian multiple-access channels. *IEEE Trans. on Inform. Theory,* January 1986, vol. IT-32, 85-96

- **M.K. VARANASI ; B. AAZHANG.** Multistage detection for asynchronous code-division multiple-access communications. *IEEE Trans.Comm.,* April 1990, vol. COM-38 (4